# EUROPEAN PATENT SPECIFICATION

(11) **EP 3 822 049 B1**
(45) Date of publication and mention of the grant of the patent: **19.04.2023**
(21) Application number: 19382993.4
(22) Date of filing: 13.11.2019
(51) Int. Cl.: B65G 47/90, B25J 15/00, B26D 7/18

(54) **SYSTEM FOR PICKING-UP ELEMENTS**
SYSTEM ZUM GREIFEN VON ELEMENTEN
SYSTEME DE PREHENSION POUR ELEMENTS

(43) Date of publication of application: 19.05.2021
(60) Divisional application: 23161253.2
(73) Proprietor: Open Mind Ventures, S.L.U., 08700 Igualada Barcelona (ES)
(72) Inventor: BALCELLS MERCADE, Antonio, 08700 IGUALADA (Barcelona) (ES); GUIMEÀ PEROLA, Antoni, 08700 IGUALADA (Barcelona) (ES); CARRER VIVES, Jose, Mª, 08700 IGUALADA (Barcelona) (ES); BALSELLS VIVES, Bernat, 08700 IGUALADA (Barcelona) (ES)
(74) Representative: Herrero & Asociados, S.L.

(56) References cited:
- CA-A- 1 083 619
- CA-A- 1 147 764
- DE-A1- 2 650 861
- DE-U1- 20 213 111
- GB-A- 2 401 095
- JP-A- H10 218 402
- US-A- 4 153 240
- US-A- 4 157 825
- US-A- 4 905 616
- US-B1- 6 309 001

## Description

The present invention relates to a system for picking-up elements.

### Background of the Invention

Brushes which form a support surface, which can be stationary, movable, or in the form of an endless conveyor belt, while suitably fixed to a set of mechanical elements, are known today.

Said surfaces are used in different industrial fields for conveying and/or handling elements which require being lifted, which are hard to handle in contact with a regular planar surface, or which cannot be in contact with a rigid or continuous surface.

Moreover, robotic systems using different tools to enable performing different tasks are known. Said robotic systems are extremely versatile, and the various tasks can be carried out through the specialization of said tools.

There are certain elements or products in respect of which the ideal manner of picking them up is gravitational, i.e., picked up and supported at the lower part. Among such elements are laminar elements such as cloths, fabrics, and plastics, flexible components and cables, highly irregular objects, objects with wet surfaces, plant foods with delicate leaves, urban waste, used beverage cans, Tetra Brik containers, etc.

These elements are usually placed on a planar surface, such that it is difficult to suitably grip them without damaging the support surface or the element itself.

There are also elements which, for optimal pickup, due to their characteristics, irregular shapes, surface dirt, etc., need to be completely pierced (using a pick), allowing individual or multiple pickup and discharge. This could be the case of trash or garbage, or even flexible laminar elements, such as cloths and fabrics.

GB2401095A discloses a system according to the preamble of claim 1 and a tool for engaging, capturing and depositing food items comprises a bracket to couple the tool to a device for imparting controlled movement to the tool, a plurality of fixed penetration pins to capture food items by impalement, a penetration pin support member attached to the bracket, an ejection member which has apertures through which the pins pass and means for imparting movement between the support member and the ejection member.

### Description of the Invention

The need for a system for picking-up elements which facilitates picking up, i.e., gripping, securing, conveying, and leaving the elements, is therefore evident.

The mentioned drawbacks are resolved with the system for picking-up elements of the invention, which has other advantages that will be described below.

The system for picking-up elements according to the present invention is defined in claim 1, and it comprises:
- an automated arm provided with at least one tool at one of its ends for picking up said elements, and
- a work surface on which said elements are placed,
wherein said tool comprises at least one pick, and in that the system also comprises a fixing-ejecting element, which fixes an element to be picked up at the initial site before being picked up by the at least one pick; and removes from the at least one pick an element that has been picked up at the target site.

Advantageously, said tool also comprises a head at which said at least one pick is fixed.

Furthermore, said fixing-ejecting element preferably comprises at least one hole or groove for the passage of said at least one pick.

Said fixing-ejecting element is fixed and said automated arm is movable with respect to said fixing-ejecting element.

According to an alternative embodiment, said fixing-ejection plate incorporates an array of flexible bristles which contact the element to be picked up before the pick, so as to assure that it is fixed during picking.

Advantageously, said work surface comprises a plurality of flexible bristles on which said elements are placed.

Although the pick can have any suitable shape or configuration, said at least one pick is preferably in the form of a needle or blade, where it can incorporate retaining elements, such as a hook, harpoon, or saw shape, or rubbery elements.

Preferably, an end of said at least one pick for perforating said element is beveled.

Furthermore, said at least one pick can be pivoting in relation to said head.

### Brief Description of the Drawings

To better understand the preceding description, a set of drawings is attached in which practical embodiments are depicted schematically and only by way of nonlimiting example.
Figure 1 is a front elevational view of several pick embodiments for use with the pick-up system according to the present invention;

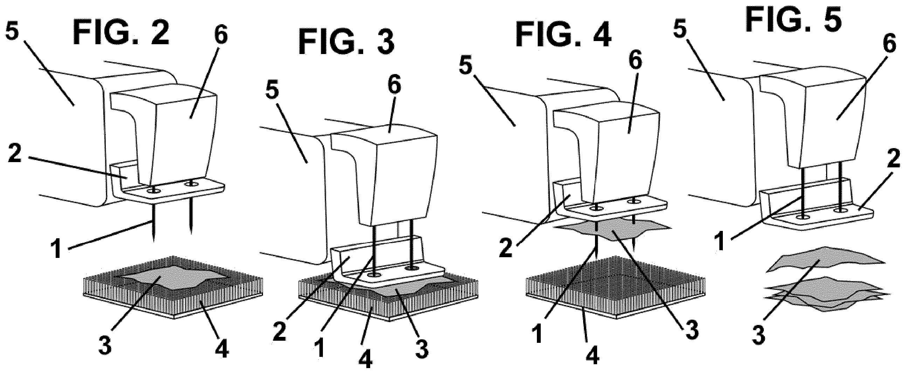

Figures 2 to 5 are perspective views of a process of picking up a laminar element with the pick-up system not according to the present invention;
Figure 6 is a perspective view of the pick-up system according to the present invention;
Figure 7 is a front elevational view of an embodiment of two picks assembled in a head, having their ends beveled;

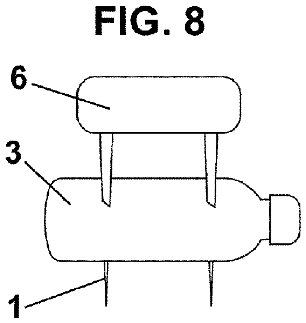

Figure 8 is a front elevational view of picks of the pick-up system according to the present invention which is used for picking up a bottle; and
Figure 9 are views of a process for picking up a volumetric element with the pick-up system according to the present invention.

### Description of Preferred Embodiments

The present invention relates to an improved, automatic, and modular pick-up system for picking up elements 3, such as objects or materials, by means of at least one pick 1 which allows retaining the elements perforated by said pick 1 and subsequently ejecting them.

The pick-up system according to the present invention comprises one or more picks 1 which can have variable profiles and designs.

For example, a pick 1 can be in the form of a needle, blade, harpoon, etc. and can have an inclination with respect to the element 3 to be picked up.

The pick-up system according to the present invention also comprises an independent or a common fixing-ejecting element 2 on these picks 1, which have a dual purpose: to fix the elements to be picked up before picking and to eject them from the picks 1 by sliding.

This fixing-ejecting element 2 moves longitudinally along the picks 1, even past its end from where the element 3 is picked up for perfect ejection thereof.

These picks 1 and the fixing-ejecting element 2 are designed and distributed based on the dominant geometry of the elements 3 to be picked up, which consist of widely varying geometries and volume, ranging from plastic bottles, cardboard, plastic, or aluminum containers, plant elements in various shapes and textures, thin layers of plastic or paper film, individual or multiple layers of fabrics or similar flexible laminar materials arranged in planar form on the surface of a base, etc.

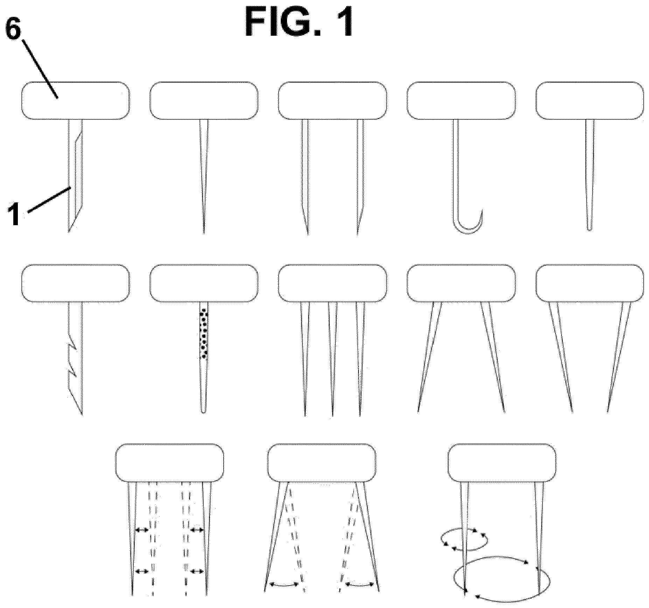

Figure 1 shows different design variables of the picks 1 according to different application needs.

Preferably, the elements 3 to be picked up are placed on a work surface 4 formed by flexible bristles of different arrangements, designs, lengths, densities, and materials, which act as a floating surface support for the elements and materials to be picked up. Occasionally this work surface 4 is also used as a conveying surface, and it is where the element 3 to be picked up is deposited.

Examples of these work surfaces are described in documents EP 2 656 987 A1 and EP 3 106 411 A1, belonging to the same inventor as the present application.

The advantage of the design of this work surface 4 is that it allows deep penetration of the picks 1, piercing the elements 3 to be picked up at its lower part, i.e., the part that is in contact with the surface of bristles, allowing these elements 3 to be picked up to be fixed in a simple manner to the pick 1 or picks which are located in a suitable position according to the nature, dimension, and arrangement on the work surface 4 so that this penetration is effective, even in individual sheets of films, fabrics, and laminar materials.

Therefore, a specific design, a suitable positioning and design of these picks 1, an optimal securing of the different elements of the elements 3 to be picked up before being perforated, and a quick and convenient ejection system formed by said fixing-ejecting element 2, are required.

The work surface 4 with flexible bristles prevents the picks 1 from having to be retracted and the depth thereof controlled so as to prevent the collision of the picks with said stationary or movable work surface 4 which supports the elements 3 to be picked up and does not damage this work surface 4 or the picks 1.

That is particularly important in laminar and flexible elements, which are impossible to pick up by perforating with other systems, which in turn allows picking up different layers of material.

Advantageously, the picks 1 are located at a movable end of an automated arm 5 or robot, which can be of the anthropomorphic, Cartesian, delta, or SCARA type, or any other type of automaton which allows movement and supports the suitable load according to the target material.

Said automated arm 5 features a suitable distribution of picks 1 according to the level of separation, hardness and geometric distribution of the elements 3 to be picked up.

The picks 1 can in turn have different geometries so as to prevent the rotation and the unwanted movement of the elements 3 to be picked up once they have been penetrated by the picks 1, such that both if the pick 1 is individual or in a group, the position of the element 3 that has been picked up is controlled, which allows a very rapid movement of the automated arm 5 and a controlled positioning during extraction of the element 3 to be picked up.

For this reason, the elements of the pick-up system according to the present invention are interchangeable, based on the element 3 to be picked up, which the system will select and use as appropriate.

Examples of tool interchange system are described in documents EP19382374, belonging to the same inventor as the present application.

The pick-up system according to the present invention also comprises a head 6 where the picks 1 are fixed and the fixing-ejecting element 2 can move with respect to the head 6, for example, by means of an electrical drive, pneumatic drive, or other mechanical combinations, thus allowing detachment of the element that has been picked up at a delivery point by means of the movement of the fixing-ejecting element 2 with respect to the head 6.

At the time of the pick-up, the fixing-ejecting element 2 is located in the outer area of the tip of the picks 1, contacting the element 3 to be picked up before the picks 1.

This fixing-ejecting element 2, therefore, acts as a fixing for the elements 3 to be picked up. This fixing allows a quick and sure entry of the pick 1 since the element to be picked up does not move at the time of penetration, allowing precise insertion of the pick 1.

It should be indicated that the pick-up system according to the present invention can also work without this prior fixing performed by the fixing-ejecting element 2 in cases where the elements 3 to be picked up are very stable or planar and penetration of the pick 1 requires little effort.

This fixing-ejecting element 2 is designed such that the picks 1 pass through same, since its design incorporates holes arranged for this purpose.

At the time of penetration, this fixing-ejecting element 2 is retracted longitudinally over the picks 1, which can fully enter the elements 3 to be picked up effortlessly and the fixing-ejecting element 2 can be arranged in the rear part of the elements 3 that have been picked up and perforated, often in contact with these elements, and spaced apart in the opposite direction from the tips of the picks 1.

This fixing-ejecting element 2 moves in the reverse direction, i.e., towards the penetrating tips of the picks 1, when the elements 3 to be picked up are to be detached from the picks 1, the elements 3 sliding over the picks so that they can be released. This longitudinal movement can be carried out pneumatically, with motors, or through the actual movement of the automated arm 5.

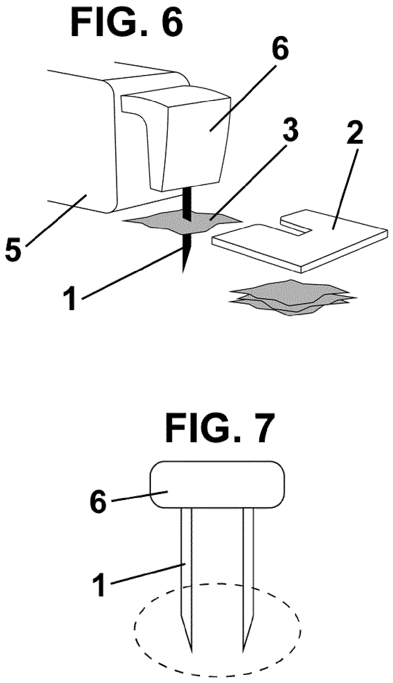

Figure 6 shows a configuration of the pick-up system according to the present invention, which consists of using only the head 6 where the picks 1 are fixed in the automated arm 5. That is, in this embodiment the fixing-ejecting element 2 is not provided in the movable part of the system, and only a stationary ejection element 2 fixed at a delivery point is used, said stationary ejection element 2 comprising one or more grooves for picks 1 where they can be freely fitted and slid.

This only stationary ejection element 2 has grooves so as to allow the perpendicular entry of the picks and, when placed between the head 6 and the element 3 to be picked up, allows the detachment of the element by means of the movement of the automated arm 5 in the direction opposite to that of the pick-up direction, using the only ejection element at the delivery point as a retention of the elements 3 to be picked up.

This system is very simple and useful for some types of elements to be picked up, such as stable geometric stationary elements, in which the nature of the material does not allow movement when the tip of the pick 1 contacts same in order to penetrate it, such that this stress does not affect it and allows it to be pierced.

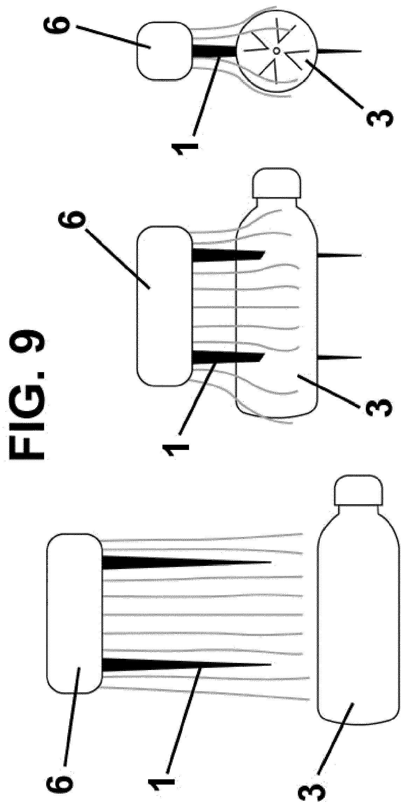

Figure 9 shows another possible configuration of the fixing-ejecting element 2, which incorporates an array of flexible bristles securing the element 3 to be picked up before being perforated.

Moreover, in the head 6 where the picks 1 are located, the latter are advantageously arranged such that their pointed ends are deliberately positioned facing one another, thereby establishing outward horizontal movement with respect to the plane of the element 3 to be picked up at the time of pick-up which creates a securing stress on the element 3, preventing it from slipping and being detached by itself in an undesirable manner.

That is possible because the pointed ends are advantageously sectioned in diagonal, i.e., such that the pointed end is tangent to a point of the arc of the section of the pick 1, therefore, not concentric with the axis of the pick, as can be seen in Figure 7.

The picks 1 can have various geometries and dimensions: circular, square, rectangular, etc., suited to the elements 3 to be picked up and so as to prevent the rotation of the perforating elements when there is only one pick 1.

The tips of these picks 1 can be interchangeable and made of harder materials, such that when the edge becomes dull and its penetration capacity is reduced, it is not necessary to change the entire pick 1, which results in a lower maintenance cost.

In cases of elements to be picked up which have certain rigidity and particularities concerning their physical behavior, it is also contemplated to use picks 1 with the sharp end being concentric, preventing the previously described horizontal movement, and with slots, harpoons, knurling, blasting, with intermediate areas made of materials which exhibit retention, such as silicone or another texture in the part behind the area of the penetration tip according to the material, providing grip so as to prevent the unwanted falling of the element 3 to be picked up.

The need to use the aforementioned work surface 4 based on bristles is even more obvious in this case, since it is not compromised by the elements being picked up.

The pick-up system according to the present invention is also effective for the picking up and positioning of adhesive labels on elements to be picked up by means of the use of the pick-up system with picks in multiple urban and industrial waste, packaging, logistics, and industrial processing applications.

Although reference has been made to specific embodiments of the invention, it is obvious for one skilled in the art that the described pick-up system is susceptible to a number of variations and modifications, and that all the mentioned details can be replaced with other technically equivalent ones without departing from the scope of protection defined by the attached claims.

## Claims

1. System for picking-up elements, comprising:
- an automated arm (5) provided with at least one tool at one of its ends for picking up said elements (3), and
- a work surface (4) on which said elements (3) are placed,
said tool comprising at least one pick (1) and in that the pick-up system also comprises a fixing-ejecting element (2), which removes from the at least one pick (1) an element (3) that has been picked up,
**characterized in that** said fixing-ejecting element (2) is fixed and said automated arm (5) is movable with respect to said fixing-ejecting element (2).

2. System for picking-up elements according to claim 1, wherein said tool also comprises a head (6) at which said at least one pick (1) is fixed.

3. System for picking-up elements according to claim 1, wherein said fixing-ejecting element (2) comprises at least one hole or groove for the passage of said at least one pick (1).

4. System for picking-up elements according to claim 1, wherein said fixing-ejecting element (2) comprises a plurality of flexible bristles.

5. System for picking-up elements according to claim 1, wherein said work surface (4) comprises a plurality of flexible bristles, on which said elements (3) are placed.

6. System for picking-up elements according to claim 1, wherein said at least one pick (1) is in the form of a needle or harpoon.

7. System for picking-up elements according to claim 1, wherein an end of said at least one pick (1) for perforating said element is beveled.

8. System for picking-up elements according to claim 2, wherein said at least one pick (1) is pivoting in relation to said head (6).

## Patentansprüche

1. System zum Aufnehmen von Elementen, umfassend:
- einen automatisierten Arm (5), der an einem seiner Enden mindestens ein Werkzeug zum Aufnehmen der Elemente (3) aufweist, und
- eine Arbeitsfläche (4), auf der die Elemente (3) abgelegt werden,
wobei das Werkzeug mindestens ein Aufnahmeelement (1) umfasst, und das Aufnahmesystem weiter ein Fixier-Auswurfelement (2) umfasst, das ein aufgenommenes Element (3) von dem mindestens einen Aufnahmeelement (1) entfernt,
**dadurch gekennzeichnet, dass** das Fixier-Auswurfelement (2) fixiert ist und der automatisierte Arm (5) in Bezug auf das Fixier-Auswurfelement (2) beweglich ist.

2. System zum Aufnehmen von Elementen gemäß Anspruch 1, wobei das Werkzeug weiter einen Kopf (6) umfasst, an dem das mindestens eine Aufnahmeelement (1) befestigt ist.

3. System zum Aufnehmen von Elementen gemäß Anspruch 1, wobei das Fixier-Auswurfelement (2) mindestens ein Loch oder eine Nut für den Durchgang des mindestens einen Aufnahmeelements (1) umfasst.

4. System zum Aufnehmen von Elementen gemäß Anspruch 1, wobei das Fixier-Auswurfelement (2) eine Vielzahl von flexiblen Borsten umfasst.

5. System zum Aufnehmen von Elementen gemäß Anspruch 1, wobei die Arbeitsfläche (4) eine Vielzahl von flexiblen Borsten umfasst, auf denen die Elemente (3) abgelegt werden.

6. System zum Aufnehmen von Elementen gemäß Anspruch 1, wobei das mindestens eine Aufnahmeelement (1) die Form einer Nadel oder einer Harpune hat.

7. System zum Aufnehmen von Elementen gemäß Anspruch 1, wobei ein Ende des mindestens einen Aufnahmeelements (1) zum Perforieren des Elements abgeschrägt ist.

8. System zum Aufnehmen von Elementen gemäß Anspruch 2, wobei das mindestens eine Aufnahmeelement (1) in Bezug auf den Kopf (6) schwenkbar ist.

## Revendications

1. Système de préhension d'éléments, comprenant :
- un bras automatisé (5) pourvu d'au moins un outil à l'une de ses extrémités pour la préhension desdits éléments (3), et
- une surface de travail (4) sur laquelle lesdits éléments (3) sont placés,
ledit outil comprenant au moins un pic (1) et en ce que le système de préhension comprend également un élément de fixation-éjection (2), qui retire, de l'au moins un pic (1), un élément (3) qui a été pris,
**caractérisé en ce que** ledit élément de fixation-éjection (2) est fixé et ledit bras automatisé (5) est mobile par rapport audit élément de fixation-éjection (2).

2. Système de préhension d'éléments selon la revendication 1, dans lequel ledit outil comprend également une tête (6) au niveau de laquelle ledit au moins un pic (1) est fixé.

3. Système de préhension d'éléments selon la revendication 1, dans lequel ledit élément de fixation-éjection (2) comprend au moins un trou ou une rainure pour le passage dudit au moins un pic (1).

4. Système de préhension d'éléments selon la revendication 1, dans lequel ledit élément de fixation-éjection (2) comprend une pluralité de poils souples.

5. Système de préhension d'éléments selon la revendication 1, dans lequel ladite surface de travail (4) comprend une pluralité de poils souples sur lesquels lesdits éléments (3) sont placés.

6. Système de préhension d'éléments selon la revendication 1, dans lequel ledit au moins un pic (1) est sous la forme d'une aiguille ou d'un harpon.

7. Système de préhension d'éléments selon la revendication 1, dans lequel une extrémité dudit au moins un pic (1) pour perforer ledit élément est biseautée.

8. Système de préhension d'éléments selon la revendication 2, dans lequel ledit au moins un pic (1) pivote par rapport à ladite tête (6).
